# EUROPEAN PATENT SPECIFICATION

(11) **EP 2 222 577 B1**
(45) Date of publication and mention of the grant of the patent: **04.07.2018**
(21) Application number: 08861922.6
(22) Date of filing: 17.12.2008
(51) Int. Cl.: B65G 1/02, E04F 19/02, E04F 13/073, E04F 13/08

(54) **PROTECTION BLOCK**
SCHUTZBLOCK
BLOC DE PROTECTION

(30) Priority: 18.12.2007 AU 2007906932
(43) Date of publication of application: 01.09.2010
(73) Proprietor: Innovation Central PTY Ltd, Wingfield, SA 5013 (AU)
(72) Inventor: HUXTABLE, Paul, Stewart, Trinity Gardens South Australia 5068 (AU)
(74) Representative: Schnappauf, Georg
(86) International application number: PCT/AU2008/001843
(87) International publication number: WO 2009/076707

(56) References cited:
- EP-A1- 1 803 870
- WO-A1-2005/049453
- WO-A1-2005/049453
- US-A- 4 143 612
- US-A- 4 143 612
- US-B1- 6 289 836
- US-B1- 6 289 836

## Description

### Field of the Invention

The present invention relates to a protection block according to the preamble of claim 1. The invention has particular but not exclusive application for protecting structural columns in warehouses from impact.

### Background of the Invention

Such a protection block is known from WO2005049453A1. Structural columns in warehouses and factories are repeatedly subject to inadvertent impact by forklifts as they are used to shift goods from one location to another. Walls and other projecting elements are also subject to inadvertent impact by vehicles, particularly in environments where there is heavy traffic flow in a confined space.

Various protective devices have been developed to protect structural columns and walls that are vulnerable to impact from vehicles. The protective devices developed to date are not ideal. Disadvantages include difficulties with installing or repairing such devices, the difficulty of transporting such devices, the high costs of some of those devices and the need to provide a range of different protective devices to accommodate the varying shape of such columns.

Protective devices used in warehouses and the like also need to be able to withstand a range of different environments. For example, they need to withstand low temperature environments when used in cool rooms or freezer rooms and corrosive environments in certain industrial applications.

### Summary of the Invention

The main object of the invention relates to a protective block having the features of clam 1. Further preferred embodiments are defined by the features of dependent claims 2-16.

### Description of the Drawings

Embodiments of the invention will now be described, by way of example only, with reference to the accompanying drawings in which:
Figure 1 is a perspective view of a protection block in accordance with an embodiment of the invention;
Figure 2 is a top plan view of the protection block shown in Figure 1;
Figure 3 is a perspective view of a locating pin;
Figure 4 is a perspective view of a section of a curved wall protective barrier in accordance with one embodiment of the invention;
Figure 5 is a perspective view of a section of a straight wall protective barrier in accordance with one embodiment of the invention;
Figure 6 is an enlarged view of an end portion of the straight wall section shown in Figure 5;
Figure 7A is a perspective view of a small square column with a protective barrier in accordance with an embodiment of the invention located thereabout. The protective barrier is five protection blocks high;
Figure 7B is a perspective view of a small square column with a protective barrier in accordance with an embodiment of the invention located thereabout. The protective barrier is ten protection blocks high;
Figure 7C is a cross-sectional view of the small square column and protective barrier shown in Figure 7A;
Figure 8A is a perspective view of a large square column with a protective barrier in accordance with an embodiment of the invention located thereabout. The protective barrier is five protection blocks high;
Figure 8B is a perspective view of a large square column with a protective barrier in accordance with an embodiment of the invention located thereabout. The protective barrier is ten protection blocks high;
Figure 8C is a cross-sectional view of the large square column and protective barrier shown in Figure 8A;
Figure 9A is a perspective view of a circular column with a protective barrier in accordance with an embodiment of the invention located thereabout. The protective barrier is five protection blocks high;
Figure 9B is a perspective view of a circular column with a protective barrier in accordance with an embodiment of the invention located thereabout. The protective barrier is ten protection blocks high;
Figure 9C is a cross-sectional view of the circular column and protective barrier shown in Figure 9A;
Figure 10A is a perspective view of an H-section column with a protective barrier in accordance with an embodiment of the invention located thereabout. The protective barrier is five protection blocks high;
Figure 10B is a perspective view of an H-section column with a protective barrier in accordance with an embodiment of the invention located thereabout. The protective barrier is ten protection blocks high;
Figure 10C is a cross-sectional view of the H-section column and protective barrier shown in Figure 10A;
Figure 11A is a perspective view of a very large square column with a protective barrier in accordance with an embodiment of the invention located thereabout. The protective barrier is five protection blocks high;
Figure 11B is a perspective view of a very large square column with a protective barrier in accordance with an embodiment of the invention located thereabout. The protective barrier is ten protection blocks high; and
Figure 11C is a cross-sectional view of the large square column and protective barrier shown in Figure 11A.

### Detailed Description of the Preferred Embodiments

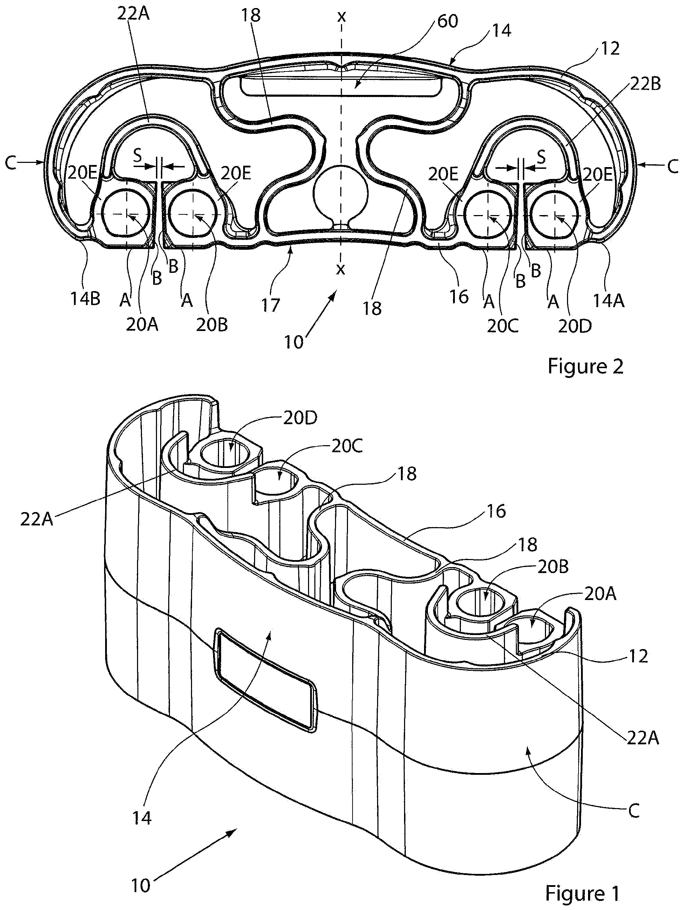

Figures 1 and 2 illustrate a protection block 10 in accordance with an embodiment of the invention. As will be explained in more detail below, a plurality of protection blocks 10 are located together so as to form a combination of protection blocks. At least two combinations of protection blocks are connected together to form a protective barrier for protecting a structure. The structure may adopt different forms such as, for example, a wall or a column.

The protection block 10 is injection moulded or extruded from a plastics material. The protection block 10 includes a bumper member 12 having an outer bumper surface 14 for receiving impact forces, a generally elongate structure positioning member 16 having a positioning surface 17 arranged in use to be positioned substantially against or adjacent to a border defined by a structure to be protected, and resiliently flexible joining portions 18 joining the bumper member 12 to the structure positioning member 16. The bumper surface 14 has opposed curved side parts C and first and second ends 14a, 14b.

The protection block 10 also includes four locating apertures 20 which are marked as 20A, 20B, 20C, 20D. The apertures 20 extend through the height of the block 10 and are spaced along the length of the protection block 10. The apertures 20A, 20B, 20C, 20D are located adjacent the elongate structure positioning surface 17 and are located in pairs 20A, 20B and 20C, 20D, one pair either side of the centre axis X-X. Adjacent apertures 20A, 20B and 20C, 20D of each pair are separated by a spacing S that can contract when impact forces are applied to the bumper surface 14. This will be discussed in more detail below.

Each of the locating apertures 20A, 20B, 20C, 20D is arranged so that a locating pin 50 can be positioned within and extend through the aperture 20. The positioning of the locating pin 50 within the apertures 20A, 20B, 20C, 20D will be explained in more detail subsequently.

The protection block 10 includes a display tag 60. The display tag 60 is made from a thin web of material that is located at the split height of the moulded protection block 10. The display tag 60 is provided only to enable information to be displayed to the user and does not have any other function. With the possible exception of the display tag 60, the protection block 10 is symmetrical about the centre axis X-X.

Each aperture 20A, 20B, 20C, 20D is substantially circular, is bounded by a continuous wall and is formed in an element 20E of the protection block 10. Each element 20E includes a face A and a face B which are substantially flat and which are "squared off" rather than being "curved" as per other areas of the protection block 10. As best illustrated in Figure 2, the faces B of the elements 20E containing apertures 20A, 20B and the faces B of the elements 20E containing apertures 20C, 20D face one another and are separated by the spacing S.

A resiliently flexible joining portion 22A joins the respective elements 20E containing the apertures 20A, 20B and a resiliently flexible joining portion 22B joins the respective elements 20E containing the apertures 20C, 20D.

It should be appreciated that the joining portions 18, 22A, 22B are formed so as to be resiliently flexible such that when the outer bumper surface 14 is impacted the bumper member 12 will deflect. With higher impact forces, the bumper member 12 will deflect even further causing flexure of the resiliently flexible joining portions 18 and/or the resiliently flexible joining portions 22A, 22B.

If the impact force is very high, some or all of the joining portions 18, 22A, 22B may be caused to temporarily or even permanently deform. In extreme circumstances, some or all of the joining portions 18, 22A, 22B may fracture sacrificially so as to thereby prevent damage to the structure being protected. Similarly, under extremely high impact loads, the bumper member 12 and/or the structure positioning member 16 may also be caused to fracture.

In some instances, impact of the protection block 10 on the bumper surface 14 in the area of the curved side parts C may cause the spacing S between adjacent elements 20E to be increased, to be reduced or may cause the faces B of adjacent elements 20E to impact one another. The "squared off" shape enables such impact to occur in a manner that will typically prevent damage to the elements 20E.

Each of the joining portions 18, 22A, 22B adopts a tortuous path. The joining portions 22A, 22B form and extended C-shape and the joining portions 18 form an extended S-shape. The tortuous path of each joining portion 18, 22A, 22B is curved so as to minimise any points of stress concentration along the length of the path. A tortuous path is adopted so as to better enable the joining portions 18, 22A, 22B to accommodate any impact force. It will be appreciated that each resiliently flexible joining portion 18 acts as a spring between the bumper member 12 and the structure positioning member 16 when an impact force is applied to the bumper surface 14. Furthermore, each of the joining portions 22A, 22B act as a spring between each of the respective pairs of adjacent elements 20A when an impact force is applied to the bumper surface 14.

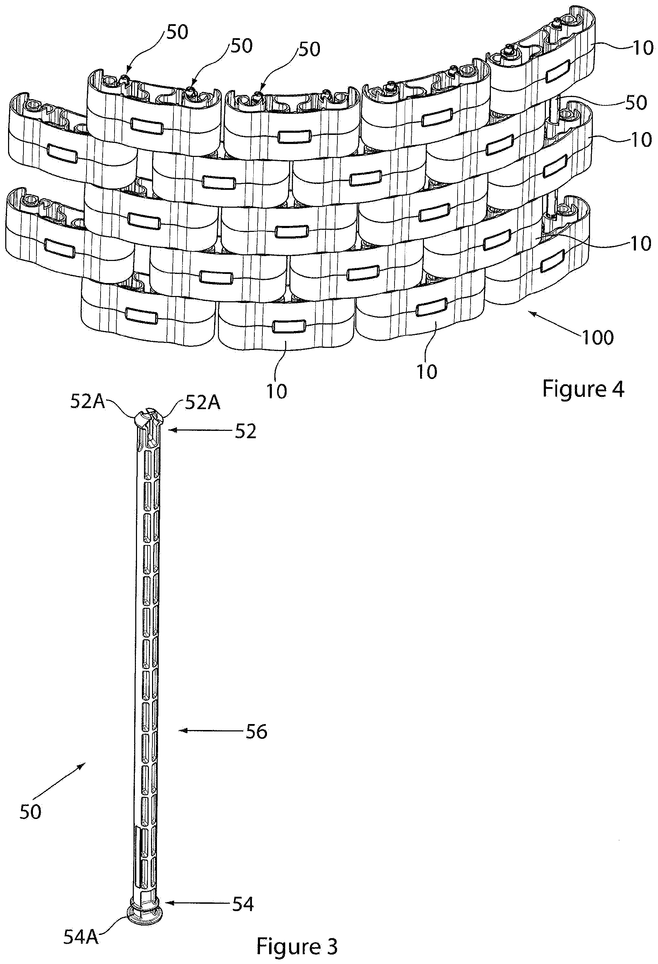

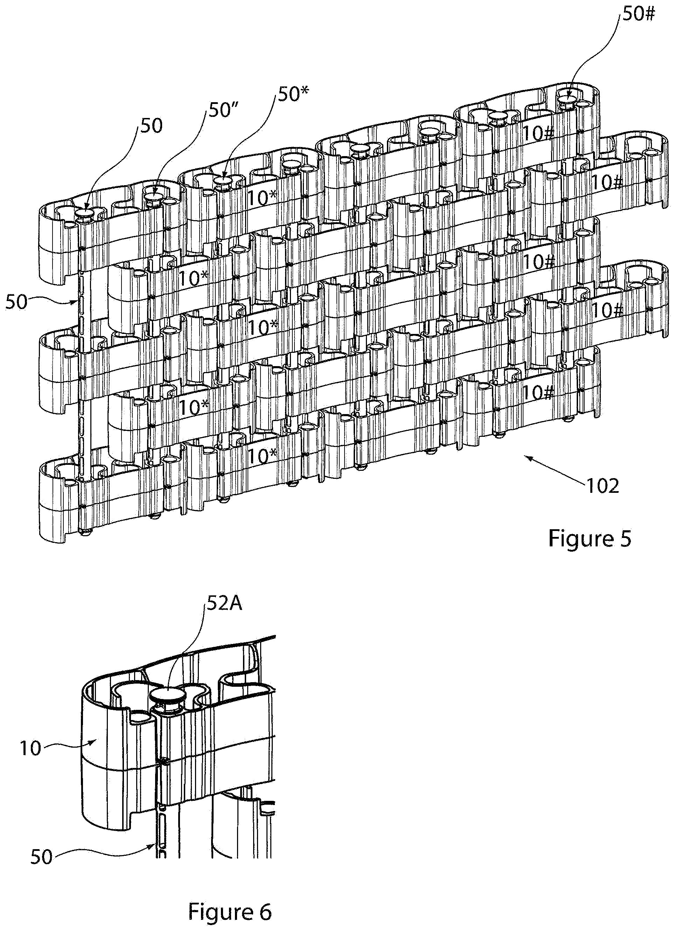

Figures 4 and 5 illustrate sections of respective curved and straight wall barriers 100, 102 in accordance with an embodiment of the invention. The curved and straight wall barriers 100, 102 are non-continuous in the sense that the barriers 100, 102 have free ends. Each barrier 100, 102 is formed from a plurality of combinations of protection blocks 10 and locating pins 50 that are assembled together. The protection blocks 10 are arranged in rows so that they stack one row upon another. The protection blocks 10 of one row are offset horizontally relative to the blocks 10 of the next adjacent row in a way similar to which conventional building bricks are laid. Each locating pin 50 extends substantially vertically and is located in the aligned locating apertures 20 of the stacked protection blocks 10. As shown, the locating pin 50 is sized so as to extend through five protection blocks 10. It will of course be appreciated that the length of the locating pin 50 may vary so that it may locate together a larger or lesser number of rows of protection blocks 10.

As best illustrated in Figure 5, each locating pin 50 is arranged to locate a different combination of protection blocks 10. For example, as shown in Figure 5, locating pin 50* locates the various protection blocks 10* and locating pin 50# locates the various protection blocks 10#.

It will also be noted from Figure 5 that adjacently located combinations of protection blocks 10 within a section of the barrier 102 include at least one common protection block 10. For example, the combination of protection blocks located by locating pin 50" and the combination of protection blocks located by locating pin 50* have the two left most positioned of the protection blocks 10* in common. It will be seen that the locating pins 50" and 50* extend through apertures 20B, 20C of those two protection blocks 10*.

Figure 3 better illustrates the locating pin 50. As shown, the locating pin 50 includes a first end 52, a second end 54 and a shank portion 56 located there between. The first end 52 of the pin 50 includes a pair of resiliently deflectable members 52A that extend outwardly of the shank portion 56. The resiliently deflectable members 52A are sized such that they must be deflected inwardly (with respect to the longitudinal axis of the pin 50) in order for the first end 52 of the pin 50 to pass into one of the locating apertures 20. Once out through the aperture 20 the deflectable members 52A return to their non-deflected position and thereby prevent the first end 52 of the locating pin 50 from re-entering that aperture 20 and thus the protection block 10 is prevented form inadvertently dislocating off the first end 54 of the locating pin 50.

The second end 54 of the pin 50 includes a disc shaped portion 54A which has a diameter greater than that of the diameter of the apertures 20A, 20B, 20C, 20D of the protection block 10. Accordingly, the second end 54 of the pin 50 cannot pass through any of the apertures 20A, 20B, 20C, 20D of the protection block 10. This is best shown in Figure 6.

It will be noted that the top and bottom profiles of the protection block 10 are configured relative to the first and second ends 52, 54 of the locating pins 50 in use so that they do not prevent stacking of the rows of protection blocks 10 one atop the other. In other words, the first and second ends 52, 54 of the locating pins 50 are arranged not to interfere with adjacent rows of protection blocks 10 in use.

It will also be noted that in Figure 4 the first end 52 of each locating pin 50 is positioned uppermost, whereas in Figure 5 the second end 54 of the locating pin 50 is positioned uppermost. It will thus be appreciated that the pin 50 can be used in either orientation.

The shank portion 56 of the locating pin 50 is sized relative to the apertures 20A, 20B, 20C, 20D to enable the protection blocks 10 to be rotated relative to the pin 50. This allows the various protection blocks 10 to be angled relative to one another and hence enables the formation, for example, of the curved protection barrier shown in Figure 4. The apertures 20A, 20B, 20C, 20D are sized relative to the shank 56 of the locating pin 50 to prevent unwanted side to side movement of the protection blocks 10 relative to the locating pins 50. Such an arrangement helps to ensure the stability of the barriers 100, 102.

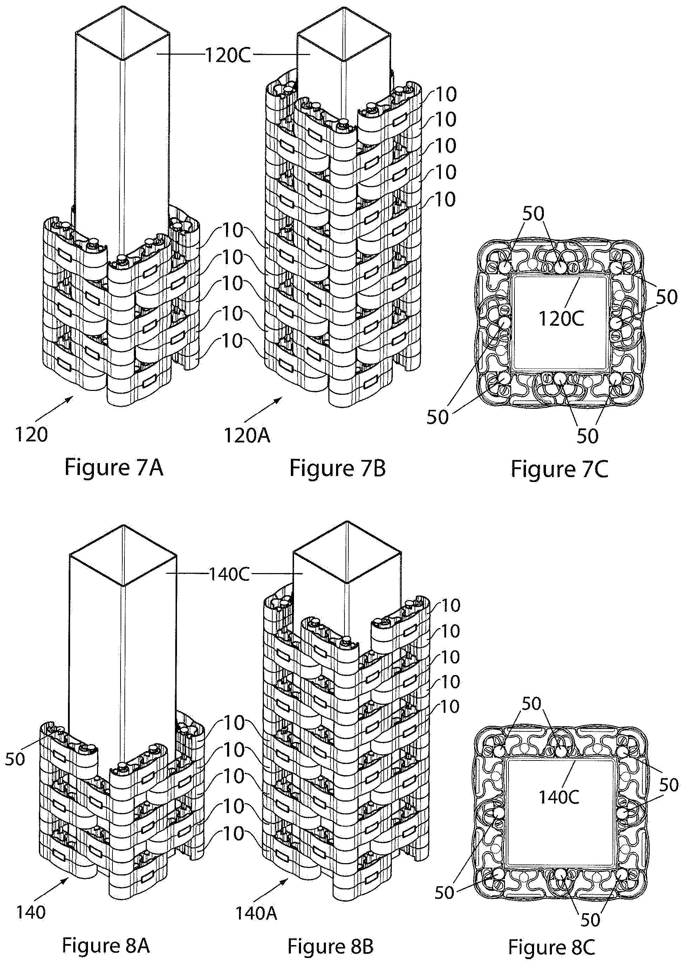

Figures 7A to 10C illustrate different shaped and sized continuous protection barriers 120, 140, 160, 180 arranged to protect a continuous border defined by different shaped and sized columns 120C, 140C, 160C, 180C. The barriers 120, 140, 160, 180 are said to be continuous because there are no protection blocks 10 with "free" or unattached ends. In other words, each of the protection blocks 10 forming the various barriers 120, 140, 160, 180 are connected to two other protection blocks 10. In contrast, the curved and straight wall barriers 100, 102 shown in Figures 4 and 5 each include some protection blocks 10 with "free" ends.

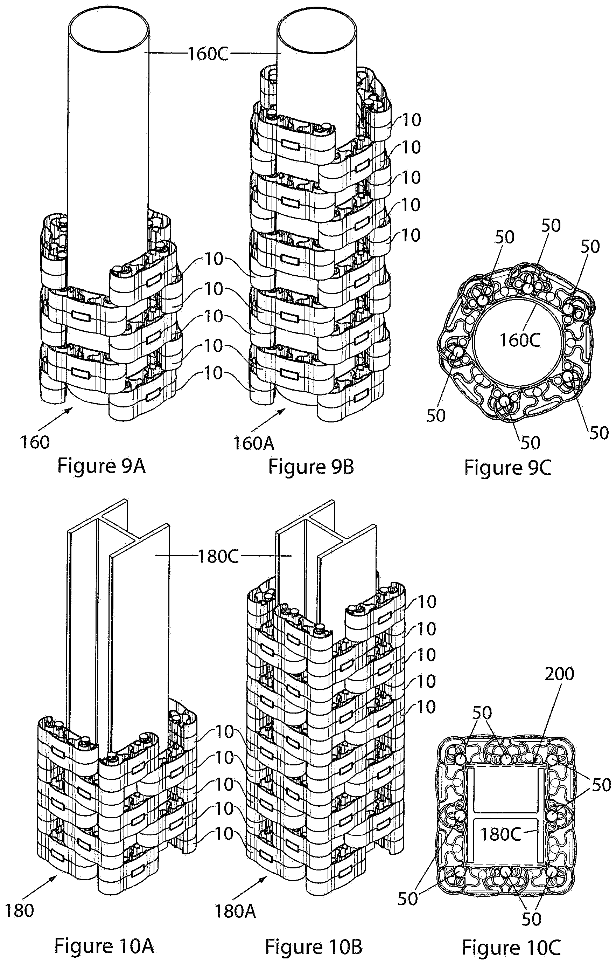

It should be understood that the border defined by the structure to be protected (i.e. the columns 120C, 140C, 160C) will in most instances correspond to the outer periphery of the structure. However, for other structures, for example the H-section column of Figures 10A, 10B and 10C, the border is shaped as a rectangular figure having opposed sides respectively equal to the maximum width and depth of the column. It will thus be appreciated that the protection blocks 10 or any parts thereof do not intrude into that border.

In each of Figures 7A to 10C, the structure positioning surface 17 of each protection block 10 is located substantially adjacent to the border defined by the different shaped columns 120C, 140C, 160C, 180C.

Figure 7A illustrates the protection barrier 120 for protecting the small square column 120C. In Figure 7A there are five rows of four protection blocks 10. Eight locating pins 50 are used to locate the protection blocks 10 around the border of the column 120C. Accordingly, each protection block 10 has two locating pins 50 extending through it and thus two of the locating apertures 20 of each block are not in use. Figure 7C best illustrates the eight locating pins 50.

The protection barrier 120A of Figure 7B is twice as high as the protection barrier 120. It is made by stacking a second five rows of four protection blocks 10 (and their eight locating pins 50) on top of a first five rows of four protection blocks 10 (and their eight locating pins 50). Alternatively, eight longer locating pins could be used to locate the ten rows of four protection blocks 10.

Figures 8A, 8B and 8C show protection barrier 140, 140A for protecting the large square column 140C. Column 140 has a greater width and depth dimension than column 120C. It should be noted that the barriers 140, 140A are made from the same number and same sized protection blocks 10 respectively shown in barriers 120, 120 shown in Figures 8A and 8B. However, by changing the particular locating aperture 20 through which the locating pin 50 is positioned it is possible to increase the dimensions of the border that the protection blocks 10 protect. For example, if you compare Figures 7A and 8A you will see that the spacing between the ends of adjacent protection blocks 10 in a particular row is greater in Figure 8A than in Figure 7A. This is because, in the barrier 120 shown in Figure 7A the locating pins 50 extend through locating apertures 20B and 20C. In contrast, in the barrier 140 shown in Figure 8A the locating pins 50 extend through the locating apertures 20A and 20C, thus increasing the spacing between the adjacent protection blocks 10 by a distance substantially equal to the diameter of the locating apertures 20.

Figures 9A, 9B and 9C illustrate protection barrier 160, 160A for protecting the circular column 160C. Barrier 160A is twice the height of barrier 160 because it is made from 10 rows of protection blocks 10.

Figures 10A, 10B and 10C illustrate protection barriers 180, 180A for protecting the H-section column 180C. The dashed line 200 represents the border protected by the barriers 180, 180A. As illustrated, the border line 200 is rectangular in shape. It will be noted that the protection blocks 10 or any parts thereof do not intrude inwardly of the dashed border line 200.

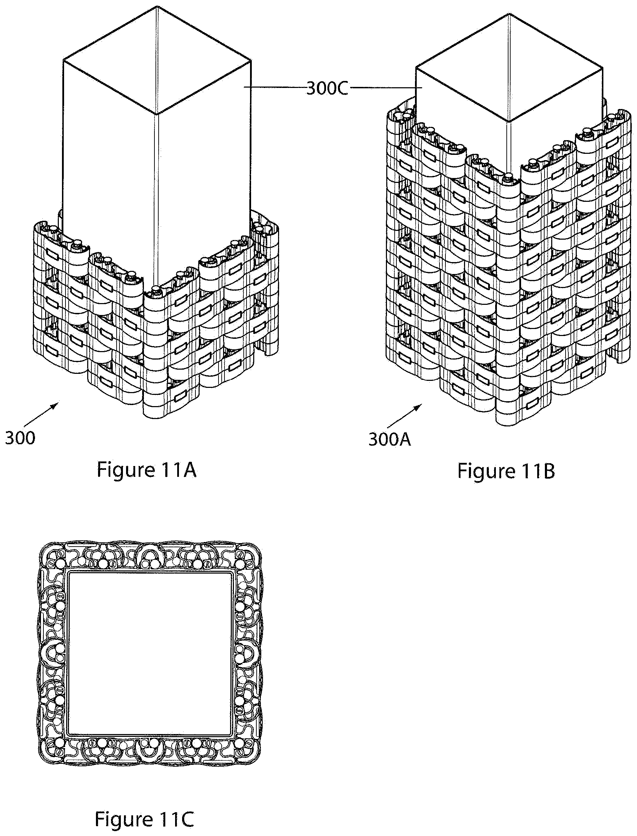

Figures 11A, 11B and 11C illustrate protection barriers 300, 300A for protecting a very large square column 300C. If you compare the barrier 300 with the barriers 120, 140 you will note that barrier 300 includes twice the number of protection blocks 10 per row. By doubling the number of protection blocks 10 per row the barrier 300 is able to protect a border of much greater size. For example, column 300C is a 20 inch square column, column 120C is an 8 inch square column and column 140C is a 10 inch square column.

It is envisaged that the protection blocks 10 and locating pins 50 would preferably be made from a plastics material.

It is envisaged that a locating pin for use with an embodiment of the invention may adopt a variety of different forms. However, such a locating pin must be able to be located within a locating aperture in the protection blocks and should preferably allow the protection block to rotate around the locating pin so that the barrier can be curved to substantially correspond to the border defined by a curved wall section or to enable a barrier to be wrapped about a column (or other upstanding element) and then to enable the "free" ends of the barrier to be located together using another locating pin.

In a preferred form, the locating pin is shaped so that the barrier formed by the plurality of protection blocks and locating pins can be lifted off the ground and up around the column as a single unit. When combinations of protection blocks are stacked one atop the other it is desirable that those combinations be connected together. This connection may be achieved by a locating pin that connects at least one protection block from the lower combination with at least one protection block with an upper combination (i.e. the combinations stacked atop thereof).

A protective barrier in accordance with an embodiment of the invention is particularly advantageous because it can be readily assembled simply by stacking rows of protection blocks and positioning locating pins in the appropriate locating apertures. The height of the barrier can be adjusted by adding further rows of protection blocks with appropriately positioned locating pins. The dimension (i.e. the width and/or depth dimension) of the border protected by the barrier can be adjusted by locating the locating pin in different locating aperture combinations of the protection blocks and/or by changing the number of protection blocks per row and/or by rotating the protection blocks to different angular positions about the locating pins.

In the event of a protection block being seriously damaged, it can be simply and easily removed. This is done by removing any locating pin(s) that extends through the apertures of the damaged protection block, pulling out the damaged block and replacing it with a new one. The locating pin or pins are then reinserted. It will thus be appreciated that repair costs are quite minimal when compared to the cost of providing an entirely new barrier.

The protection blocks and pins can be made in a variety of different sizes and colour combinations. The profile of the bumper surface may be varied to meet different requirements. However, normally the bumper surface would be smooth and continuous.

The modular nature of the protection blocks means that they are readily stackable for transport and storage purposes.

Embodiments of the invention provide a very effective and versatile protective barrier. The protective barrier may be used to protect structural columns, walls or any other projecting elements that may be subject to inadvertent impact or used to protect other upstanding or projecting elements that need to be temporarily shielded or guarded. For example, free standing pipe work, equipment that is undergoing repairs, water meters etc.

The embodiments have been described by way of example only and modifications within the scope of the invention are envisaged.

## Claims

1. A protection block (10) including:
a bumper surface (14) for receiving impact forces;
an elongate structure positioning surface (17) arranged in use to be positioned substantially against or adjacent to a border defined by a structure to be protected;
at least one resiliently flexible joining member (18) joining said bumper surface (14) to said structure positioning surface (17);
at least two pairs of locating apertures (20), **characterised in that** each locating aperture (20) is substantially circular and is bounded by a continuous wall and is arranged to receive a locating pin (50), and
adjacent locating apertures (20) of each pair of locating apertures are separated by a spacing (S) configured to expand or contract when impact forces are applied to the bumper surface;
said locating apertures (20) arranged so that when a plurality of said protection blocks (10) are stacked a locating pin (50) can be positioned within at least one of the locating apertures (20) of each of said plurality of protection blocks (10) to locate the plurality of protection blocks together to form a combination of protection blocks, and combinations of protection blocks are configured to be connected together to form a protective barrier in which at least one protection block (10) is common to an adjacently located connected combination of protection blocks.

2. A protection block according to claim 1 wherein the locating apertures (20) are located adjacent the elongate structure positioning surface (17).

3. A protection block according to any one of claims 1 to 2 wherein each locating aperture (20) is shaped to prevent side to side movement of the locating pin (50) within the aperture.

4. A protection block according to any one of claims 1 to 3 wherein said four apertures (20A, 20B, 20C, 20D) are positioned along the length of the protection block (10) such that when two protection blocks are located together using a locating pin (50), a total end to end length of the two protection blocks is variable by positioning the locating pin in a different one of said apertures in said respective protection blocks.

5. A protection block according to claim 4 further including a resiliently flexible joining portion (22A, 22B) extending between the continuous walls bounding the locating apertures (20) of each pair of locating apertures.

6. A protection block according to any one of claims 1 to 5 wherein each locating aperture (20) is formed in an element (20E) of the protection block (10) and each element (20E) includes a first substantially flat face (B), said first substantially flat faces of each pair of locating apertures face one another and are separated by the spacing (S).

7. A protection block according to claim 6 wherein each locating aperture (20) further includes a second substantially flat face (A) extending substantially perpendicularly to the first substantially flat face (B).

8. A protection block according to any one of claims 1 to 7 wherein the bumper surface (14) has opposed curved side parts (C).

9. A protection block according to any one of claims 1 to 8 that is symmetrical.

10. A protection block according to any one of claims 1 to 9 moulded from a plastics material.

11. A protective barrier including a plurality of protection blocks (10) according to any one of claims 1 to 10.

12. A protective barrier according to claim 11 wherein the locating pin (50) includes a first end (52), a second end (54) and a shank portion (56) located therebetween, the first end of the locating pin including at least one resiliently deflectable member (52A) arranged to extend outwardly of the shank portion and which must be deflected inwardly in order for the first end of the pin to pass into either of the locating apertures (20) of the protection block (10).

13. A protective barrier according to claim 12 wherein the first end (52) of the locating pin (50) includes two opposed resiliently deflectable members.

14. A protective barrier according to claim 13 wherein the second end (54) of the locating pin (50) is disc shaped.

15. A protective barrier according to any one of claims 11 to 14 configured to be lifted off the ground and up around the structure to be protected as a single unit.

16. A protective barrier according to any one of claims 11 to 15 arranged to wrap around the structure to be protected by rotational movement of the protection blocks (10) around respective locating pins (50).

## Patentansprüche

1. Schutzblock (10), der umfasst:
eine Stoßfängerfläche (14) zum Aufnehmen von Stoßkräften;
eine längliche Strukturpositionierungsfläche (17), die im Gebrauch so angeordnet ist, dass sie im Wesentlichen gegen eine oder benachbart zu einer Grenze positioniert ist, die durch eine Struktur, die zu schützen ist, definiert ist;
mindestens ein elastisch flexibles Verbindungselement (18), das die Stoßfängerfläche (14) mit der Strukturpositionierungsfläche (17) verbindet;
mindestens zwei Paare von Fixieröffnungen (20), **dadurch gekennzeichnet, dass** jede Fixieröffnung (20) im Wesentlichen kreisförmig ist und durch eine durchgehende Wand eingegrenzt ist und angeordnet ist, um einen Fixierstift (50) aufzunehmen, und
benachbarte Fixieröffnungen (20) von jedem Paar von Fixieröffnungen durch einen Abstand (S) separiert sind, der konfiguriert ist, zu expandieren oder sich zusammenzuziehen, wenn Stoßkräfte an der Stoßfängerfläche aufgebracht werden;
wobei die Fixieröffnungen (20) so angeordnet sind, dass, wenn eine Vielzahl der Schutzblöcke (10) gestapelt ist, ein Fixierstift (50) innerhalb von mindestens einer der Fixieröffnungen (20) von jedem der Vielzahl von Schutzblöcken (10) positioniert werden kann, um die Vielzahl von Schutzblöcken miteinander zu fixieren, um eine Kombination von Schutzblöcken zu bilden, und Kombinationen von Schutzblöcken so konfiguriert sind, um miteinander verbunden zu werden, um eine Schutzbarriere zu bilden, in welcher mindestens ein Schutzblock (10) mit einer benachbart platzierten verbundenen Kombination von Schutzblöcken gemeinsam ist.

2. Schutzblock nach Anspruch 1, wobei die Fixieröffnungen (20) benachbart der länglichen Strukturpositionierungsfläche (17) platziert sind.

3. Schutzblock nach einem der Ansprüche 1 bis 2, wobei jede Fixieröffnung (20) geformt ist, um eine Seitwärtsbewegung des Fixierstifts (50) innerhalb der Öffnung zu verhindern.

4. Schutzblock nach einem der Ansprüche 1 bis 3, wobei die vier Öffnungen (20A, 20B, 20C, 20D) entlang der Länge des Schutzblocks (10) positioniert sind, so dass, wenn zwei Schutzblöcke miteinander durch Gebrauch eines Fixierstifts (50) platziert sind, eine Gesamtlänge der zwei Schutzblöcke von Ende zu Ende durch Positionieren des Fixierstifts in einer anderen der Öffnungen in den entsprechenden Schutzblöcken variabel ist.

5. Schutzblock nach Anspruch 4, der ferner einen elastisch flexiblen Verbindungsanteil (22A, 22B) umfasst, der sich zwischen den durchgehenden Wänden erstreckt, die die Fixieröffnungen (20) von jedem Paar von Fixieröffnungen eingrenzen.

6. Schutzblock nach einem der Ansprüche 1 bis 5, wobei jede Fixieröffnung (20) in einem Element (20E) des Schutzblocks (10) gebildet ist und jedes Element (20E) eine erste im Wesentlichen flache Front (B) umfasst, wobei die ersten im Wesentlichen flachen Fronten von jedem Paar von Fixieröffnungen einander gegenüberliegen und durch den Abstand (S) separiert sind.

7. Schutzblock nach Anspruch 6, wobei jede Fixieröffnung (20) ferner eine zweite im Wesentlichen flache Front (A) umfasst, die sich im Wesentlichen senkrecht zu der ersten im Wesentlichen flachen Front (B) erstreckt.

8. Schutzblock nach einem der Ansprüche 1 bis 7, wobei die Stoßfängerfläche (14) entgegengesetzt gekrümmte Seitenteile (C) aufweist.

9. Schutzblock nach einem der Ansprüche 1 bis 8, der symmetrisch ist.

10. Schutzblock nach einem der Ansprüche 1 bis 9, der aus einem Plastikmaterial geformt ist.

11. Schutzbarriere, die eine Vielzahl von Schutzblöcken (10) nach einem der Ansprüche 1 bis 10 umfasst.

12. Schutzbarriere nach Anspruch 11, wobei der Fixierstift (50) ein erstes Ende (52), ein zweites Ende (54) und einen Schaftanteil (56), der dazwischen liegt, umfasst, wobei das erste Ende des Fixierstifts mindestens ein elastisch ablenkbares Element (52A) umfasst, das so angeordnet ist, dass es sich von dem Schaftanteil nach außen erstreckt, und das nach innen abgelenkt werden muss, um das erste Ende des Stifts in eine von den Fixieröffnungen (20) des Schutzblocks (10) einzuführen.

13. Schutzbarriere nach Anspruch 12, wobei das erste Ende (52) des Fixierstifts (50) zwei entgegengesetzte elastisch ablenkbare Elemente umfasst.

14. Schutzbarriere nach Anspruch 13, wobei das zweite Ende (54) des Fixierstifts (50) scheibenförmig ist.

15. Schutzbarriere nach einem der Ansprüche 11 bis 14, die konfiguriert ist, als eine Einheit vom Boden und um die Struktur herum, die zu schützen ist, gehoben zu werden.

16. Schutzbarriere nach einem der Ansprüche 11 bis 15, die angeordnet ist, um die Struktur, die zu schützen ist, durch Rotationsbewegung der Schutzblöcke (10) um die entsprechenden Fixierstifte (50) zu umwickeln.

## Revendications

1. Bloc de protection (10) comprenant :
une surface d'amortissement (14) destinée à recevoir des forces de choc ;
une structure de positionnement de surface (17) allongée, disposée, lors de l'utilisation, pour être placée sensiblement contre une limite définie par une structure à protéger, ou pour être adjacente à cette limite ;
au moins un élément de liaison (18) souple élastique, reliant ladite surface d'amortissement (14) à ladite surface de positionnement de structure (17) ;
au moins deux paires d'ouvertures de positionnement (20), **caractérisé en ce que**
chaque ouverture de positionnement (20) est sensiblement circulaire et est délimitée par une paroi continue et est disposée pour recevoir une broche de positionnement (50), et les ouvertures de positionnement (20) adjacentes de chaque paire d'ouvertures de positionnement sont séparées par un espacement (S) configuré pour s'agrandir ou se rétrécir lorsque des forces de choc sont exercées sur la surface d'amortissement ;
lesdites ouvertures de positionnement (20) sont disposées de manière à ce que, lorsqu'une pluralité desdits blocs de protection (10) sont empilés, une broche de positionnement (50) puisse être disposée dans au moins une des ouvertures de positionnement (20) de chaque bloc de la pluralité de blocs de protection (10), afin de positionner la pluralité de blocs de protection ensemble pour former une combinaison de blocs de protection, et des combinaisons de blocs de protection sont configurées pour être reliées entre elles pour former une barrière de protection dans laquelle au moins un bloc de protection (10) est commun à une combinaison de blocs de protection reliée, disposée de manière adjacente.

2. Bloc de protection selon la revendication 1, dans lequel les ouvertures de positionnement (20) sont placées de manière adjacente à la surface de positionnement de structure (17) allongée.

3. Bloc de protection selon l'une quelconque des revendications 1 à 2, dans lequel chaque ouverture de positionnement (20) est formée pour empêcher le mouvement latéral de la broche de positionnement (50) dans l'ouverture.

4. Bloc de protection selon l'une quelconque des revendications 1 à 3, dans lequel lesdites quatre ouvertures (20A, 20B, 20C, 20D) sont placées sur la longueur du bloc de protection (10), de manière à ce que, lorsque deux blocs de protection sont disposés ensemble en utilisant une broche de positionnement (50), une longueur totale d'une extrémité à l'autre des deux blocs de protection peut être modifiée en disposant la broche de positionnement dans une ouverture différente desdites ouvertures dans lesdits blocs de protection respectifs.

5. Bloc de protection selon la revendication 4, comprenant en outre une partie de liaison (22A, 22B) souple élastique, s'étendant entre les parois continues qui délimitent les ouvertures de positionnement (20) de chaque paire d'ouvertures de positionnement.

6. Bloc de protection selon l'une quelconque des revendications 1 à 5, dans lequel chaque ouverture de positionnement (20) est formée dans un élément (20E) du bloc de protection (10), et chaque élément (20E) comporte une première face (B) sensiblement plate, lesdites premières faces sensiblement plates de chaque paire d'ouvertures de positionnement étant situées en vis-à-vis l'une de l'autre et étant séparées par l'espacement (S).

7. Bloc de protection selon la revendication 6, dans lequel chaque ouverture de positionnement (20) comporte en outre une deuxième face (A) sensiblement plate, s'étendant de façon sensiblement perpendiculaire à la première face (B) sensiblement plate.

8. Bloc de protection selon l'une quelconque des revendications 1 à 7, dans lequel la surface d'amortissement (14) présente des parties latérales (C) incurvées opposées.

9. Bloc de protection selon l'une quelconque des revendications 1 à 8, qui est symétrique.

10. Bloc de protection selon l'une quelconque des revendications 1 à 9, moulé à partir d'une matière plastique.

11. Barrière de protection comprenant une pluralité de blocs de protection (10) selon l'une quelconque des revendications 1 à 10.

12. Barrière de protection selon la revendication 11, dans laquelle la broche de positionnement (50) comprend une première extrémité (52), une deuxième extrémité (54) et une partie formant corps (56) située entre les deux, la première extrémité de la broche de positionnement comportant au moins un élément (52A) pouvant être dévié de façon élastique, qui est disposé de manière à s'étendre vers l'extérieur de la partie formant corps et doit être dévié vers l'intérieur pour que la première extrémité de la broche passe dans l'une ou l'autre des ouvertures de positionnement (20) du bloc de protection (10).

13. Barrière de protection selon la revendication 12, dans laquelle la première extrémité (52) de la broche de positionnement (50) comprend deux éléments opposés, pouvant être déviés de manière élastique.

14. Barrière de protection selon la revendication 13, dans laquelle la deuxième extrémité (54) de la broche de positionnement (50) se présente sous forme de disque.

15. Barrière de protection selon l'une quelconque des revendications 11 à 14, configurée pour être soulevée du sol et en hauteur, autour de la structure à protéger, en tant qu'unité monobloc.

16. Barrière de protection selon l'une quelconque des revendications 11 à 15, disposée pour envelopper la structure à protéger, par un mouvement de rotation des blocs de protection (10) autour de broches de positionnement (50) respectives.
